# EUROPÄISCHE PATENTSCHRIFT

(11) **EP 2 994 979 B1**
(45) Veröffentlichungstag und Bekanntmachung des Hinweises auf die Patenterteilung: **02.08.2023**
(21) Anmeldenummer: 14725397.5
(22) Anmeldetag: 08.05.2014
(51) Int. Cl.: H02K 11/33, H02K 9/06, H02K 5/18, H02K 5/22

(54) **ANTRIEBSSYSTEM**
DRIVE SYSTEM
SYSTÈME D'ENTRAÎNEMENT

(30) Priorität: 08.05.2013 DE 102013208538
(43) Veröffentlichungstag der Anmeldung: 16.03.2016
(73) Patentinhaber: Lenze Drives GmbH, 32699 Extertal (DE)
(72) Erfinder: SCHÜLER, Gerd, 56291 Badenhard (DE); TOLKSDORF, Andreas, 31789 Hameln (DE); GÖTZ, Tino, 30974 Wennigsen (DE); BÜSCHER, Fabian, 32357 Lemgo (DE); GRABS, Volker, 37619 Bodenwerder (DE); KRIESE, Michael, 30989 Gehrden (DE)
(74) Vertreter: Patentanwälte Ruff, Wilhelm, Beier, Dauster & Partner mbB
(86) Internationale Anmeldenummer: PCT/EP2014/059470
(87) Internationale Veröffentlichungsnummer: WO 2014/180958

(56) Entgegenhaltungen:
- DE-A1-102007 045 413
- FR-A1- 2 204 920
- US-A- 3 810 253
- US-A1- 2012 049 777

## Beschreibung

Die Erfindung betrifft ein Antriebssystem mit einem Elektromotor. Abhängig vom Typ des im Antriebssystem verwendeten Elektromotors kann es notwendig sein, eine elektronische Baugruppe, beispielsweise in Form eines Wechselrichters, drehfest mit dem Rotor des Elektromotors zu koppeln.

Die US 3,810,253 A und die FR 2 204 920 A1 zeigen jeweils ein Antriebssystem, bei dem Thyristoren auf einem Gebläse angeordnet sind.

Die DE 10 2007 045 413 A1 zeigt einen Trommelantrieb mit einem Elektromotor und einer angetriebenen Trommel, wobei der Elektromotor derart aufgebaut ist, dass die Statorwicklung fest mit der Trommel verbunden ist.

Die US 2012/0049777 A1 zeigt ein Kommutierungsverfahren für einen bürstenlosen DC-Motor.

Der Erfindung liegt die Aufgabe zugrunde, ein Antriebssystem mit einem Elektromotor zur Verfügung zu stellen, der eine mechanisch rotorgekoppelte elektronische Baugruppe aufweist, wobei das Antriebssystem eine hohe thermische Stabilität aufweist.

Die Erfindung löst diese Aufgabe durch ein Antriebssystem mit den Merkmalen des Anspruchs 1. Vorteilhafte Weiterbildungen des erfindungsgemäßen Antriebssystems sind in den Unteransprüchen angegeben.

Das Antriebssystem weist erfindungsgemäß einen Elektromotor auf. Dieser kann beispielsweise in Form einer Synchron- oder Asynchronmaschine, mit einer angetriebenen Welle ausgebildet sein. Der Elektromotor kann beispielsweise motorisch und/oder generatorisch betrieben werden.

Das Antriebssystem weist erfindungsgemäß mindestens eine elektronische Baugruppe auf, die in einem Ausführungsbeispiel in Form einer Leiterplatte und darauf angeordneten elektrischen Bauelementen, wie Kondensatoren, Widerständen, Mikroprozessoren, usw. ausgestaltet sein kann. Die elektronische Baugruppe kann, zumindest in Teilen, zur Funktionssteuerung des Elektromotors ausgebildet sein.

Das Antriebssystem weist erfindungsgemäß mindestens einen mittels der Welle mittelbar oder unmittelbar angetriebenen Lüfter auf, der einen Kühlluftstrom erzeugt.

Die elektronische Baugruppe ist erfindungsgemäß mit dem Lüfter mechanisch drehfest gekoppelt und dreht aufgrund der drehfesten Kopplung mit einer Lüfterdrehzahl mit. Die elektronische Baugruppe ist zusätzlich mit dem Lüfter thermisch gekoppelt, so dass ein Wärmefluss von der elektronischen Baugruppe in Richtung des Lüfters erfolgt.

Der Lüfter weist ein Lüfterrad auf welches drehfest mit der Welle gekoppelt ist, wobei die elektronische Baugruppe mit dem Lüfterrad drehfest und thermisch gekoppelt ist. Die elektronische Baugruppe ist mit einer Flügeloberflache des Lüfterrads, beispielsweise unter Verwendung von Wärmeleitpaste, verschraubt.

Die Flügeloberflache des Lüfterrads kann in einem weiteren Ausführungsbeispiel einen geeignet geformten Kontaktbereich aufweisen, der eine im Wesentlichen ebene Oberfläche mit geeigneter Dimension aufweist.

Das Lüfterrad bildet erfindungsgemäß ein Gehäuse der elektronischen Baugruppe.

Der Elektromotor kann in einem weiteren Ausführungsbeispiel ein feststehendes Gehäuse und wärmeerzeugende elektrische Funktionsgruppen aufweisen, insbesondere in Form von Statorwicklungen und/oder Rotorwicklungen, wobei die Funktionsgruppen innerhalb des Gehäuses und das Lüfterrad und die elektronische Baugruppe außerhalb des Gehäuses angeordnet sein können.

Zwischen der Welle und dem Lüfterrad kann in einem weiteren Ausführungsbeispiel ein thermisch isolierendes Element angeordnet sein, welches einen Wärmefluss von den wärmeerzeugenden elektrischen Funktionsgruppen über die Welle in Richtung des Lüfterrads bzw. der elektronischen Baugruppe minimiert.

Das Lüfterrad kann in einem weiteren Ausführungsbeispiel aus einem Werkstoff mit hoher thermischer Leitfähigkeit bestehen, beispielsweise Aluminiumlegierungen, anderen Metalllegierungen und/oder speziellen Keramiken.

Der Elektromotor weist erfindungsgemäß wärmeerzeugende elektrische Funktionsgruppen in Form von Rotorwicklungen auf, wobei in einem weiteren Ausführungsbeispiel die elektronische Baugruppe mittels lösbarer elektrischer Kontakte mit den elektrischen Funktionsgruppen elektrisch und/oder mechanisch kontaktiert sein kann.

Die elektrischen Kontakte können eine Anzahl von, beispielsweise zylindrischen, Kontaktsegmenten umfassen, die über einen Umfang der Welle gleichmäßig oder ungleichmäßig verteilt angeordnet sind.

Die elektronische Baugruppe weist erfindungsgemäß mindestens einen Wechselrichter auf, der dazu ausgebildet ist, Ansteuersignale für mindestens eine Rotorwicklung des Elektromotors zu erzeugen. Die Ansteuersignale können nach einem weiteren Ausführungsbeispiel Ansteuerströme sein, die derart mittels des Wechselrichters erzeugt werden, dass mittels der Rotorwicklung ein magnetisches Rotordrehfeld mit vorgebbarer Drehzahl bewirkt wird.

Alternativ kann die elektronische Baugruppe in einem weiteren Ausführungsbeispiel eine Gleichrichterschaltung aufweisen bzw. bilden, wie sie beispielsweise in kontaktfrei mit Energie versorgten fremderregten Elektromotoren eingesetzt wird. Dort kann elektrische Energie in Form eines magnetischen Wechselfeldes über Hilfswicklungen induktiv in Richtung des Rotors übertragen und dort gleichgerichtet werden.

Die elektronische Baugruppe kann in einem weiteren Ausführungsbeispiel Mittel zur drahtlosen Datenübertragung aufweisen.

Die Erfindung wird nachfolgend unter Bezugnahme auf die Zeichnungen beschrieben. Hierbei zeigt schematisch:
- Fig. 1: ein erfindungsgemäßes Antriebssystem und
- Fig. 2: eine Welle mit zugehöriger thermischer Isolation und Kontaktsegmenten des in Fig. 1 gezeigten erfindungsgemäßen Antriebssystems.

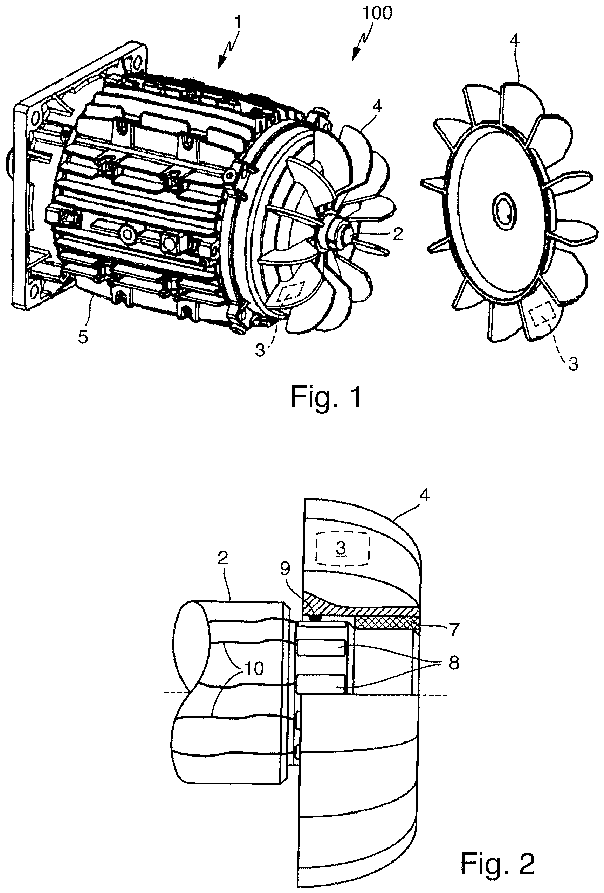

Fig. 1 zeigt schematisch ein Antriebssystem 100 mit einem Elektromotor 1, einem Lüfterrad 4 zur Kühlung des Antriebssystems 100 und einer elektronischen Baugruppe in Form eines Wechselrichters 3.

Der Elektromotor 1 weist eine Welle 2, ein Gehäuse 5, und innerhalb des Gehäuses 5 ein Rotorwicklungssystem oder eine Rotorwicklung (nicht gezeigt) und ein Statorwicklungssystem (nicht gezeigt) auf, wobei das Statorwicklungssystem beispielsweise fest an ein Drehstromnetz angeschlossen wird und die Rotorwicklung bzw. das Rotorwicklungssystem mittels des Wechselrichters 3 angesteuert wird. Das Antriebssystem 100 bildet beispielsweise eine doppelt gespeiste Asynchronmaschine.

Das Lüfterrad 4 besteht aus einer Aluminiumlegierung und ist mechanisch drehfest mit der Welle 2 gekoppelt, d.h. das Lüfterrad 4 und die Welle 2 drehen mit identischen Winkelgeschwindigkeiten.

Der Wechselrichter 3 ist in das Lüfterrad 4 integriert, indem das Lüfterrad 4 ein Gehäuse des Wechselrichters 3 bildet. Das Lüfterrad 4 weist hierzu erfindungsgemäß einen geeigneten Gehäusebereich auf, in den der Wechselrichter 3 eingesetzt ist. Der Wechselrichter 3 wird erfindungsgemäß mittels einer Schraubverbindung mechanisch fixiert.

Fig. 2 zeigt die Welle 2 mit einem thermisch isolierenden Element in Form einer Isolationshülse 7 aus thermisch schlecht leitendem Material, die radial zwischen der Welle 2 und dem Lüfterrad 4 angeordnet ist und die einen radialen Wärmefluss von der Welle 2 in Richtung des Lüfterrads 4 bzw. des Wechselrichters 3 reduziert.

Auf der Welle 2 sind weiter elektrische Kontakte in Form einer Anzahl von über den Umfang der Welle 2 verteilt angeordneten Kontaktsegmenten 8 vorgesehen, die drehfest mit der Welle 2 mechanisch verbunden sind und die dazu dienen, den Wechselrichter 3 mit den Rotorwicklungen elektrisch zu kontaktieren.

Die Kontaktsegmente 8 und die Rotorwicklungen sind mittels axial verlaufender elektrischer Leitungen 10 elektrisch miteinander verbunden. Die Leitungen 10 können beispielsweise mit der Welle 2 verklebt sein.

Korrespondierend zu den Kontaktsegmenten 8 können Druckkontakte 9 vorgesehen sein, wobei ein jeweiliges Kontaktsegment 8 und ein zugehöriger Druckkontakt 9 eine lösbare elektrische Verbindung realisieren.

Der Wechselrichter 3 kann weiter Mittel zur drahtlosen Datenübertragung aufweisen, beispielsweise einen RFID-Transponder, usw.

Die Erfindung trägt dem Problem Rechnung, dass typische zulässige Motorbetriebstemperaturen bzw. Wicklungstemperaturen im Allgemeinen höher sind als typische zulässige Betriebstemperaturen von elektronischen Baugruppen, die rotorfest angeordnet sind.

Die Erfindung ermöglicht es, die auf dem beweglichen Teil des Motors 1 angeordnete elektronische Baugruppe 3 vor Verlustwärme zu schützen, die von Motorwicklungen im Inneren des Gehäuses 5 abgegeben wird. Zusätzlich wird die von der elektronischen Baugruppe 3 selbst erzeugte Verlustwärme wirksam abgeführt.

Das Lüfterrad 4 dient zur Erzeugung eines Kühlluftstroms, der zwangsläufig auch über die Oberfläche des Lüfterrads 4 selbst strömt, insbesondere über dessen Flügeloberflächen. Das Lüfterrad ist somit besonders geeignet, die ihm innewohnende Wärme bzw. zugeführte Wärme abzuführen. Das Lüfterrad 4 kann sowohl innerhalb des Gehäuses 5 als auch außerhalb des Gehäuses 5 angeordnet sein, wobei es von einer Lüfterhaube (nicht gezeigt) umgeben sein kann, die als Berührschutz und Luftleitelement dient.

Die elektronische Baugruppe 3 ist derart angeordnet, dass diese mit dem Material des Lüfterrads 4 in thermischen Kontakt steht und so Wärme an das Lüfterrad 4 abgeben kann.

Das Lüfterrad 4 ist erfindungsgemäß gleichzeitig das Gehäuse für die elektronische Baugruppe 3.

Das Lüfterrad 4 kann zusammen mit der elektronischen Baugruppe 3 außerhalb des feststehenden Teils des Antriebssystems 100 bzw. des Gehäuses 5 angeordnet sein, wobei die elektronische Baugruppe 3 über die Welle 2 nur thermisch schwach an den warmen Teil des Antriebssystems 100 innerhalb des Gehäuses 5 gekoppelt ist. Diese schwache thermische Kopplung kann durch ein zusätzlich thermisch entkoppelndes Verbindungselement 7 zwischen Welle 2 und Lüfterrad 4 weiter reduziert werden, so dass ein Wärmeübertragung aus dem Gehäuse 5 in Richtung der außerhalb des Gehäuses 5 angeordneten elektronischen Baugruppe 3 weiter deutlich reduziert wird.

Um Wärme aus der elektronischen Baugruppe 3 optimal abzuführen, kann das Lüfterrad 4 aus einem Werkstoff mit hoher thermischer Leitfähigkeit bestehen, beispielsweise aus einer Aluminiumlegierung, anderen Metalllegierungen oder speziellen Keramiken.

Eine Verbindung zwischen dem bewegten Teil der Maschine, beispielsweise in Form einer oder mehrerer Rotorwicklungen, und der am Lüfterrad 4 angeordneten elektronischen Baugruppe 3 kann als lösbare mechanische und elektrische Kontaktverbindung gestaltet sein, so dass die elektronische Baugruppe 3 bei einem Defekt auf einfache Weise gegen eine Ersatzbaugruppe ausgetauscht werden kann.

Eine mögliche Ausführung für die Kontakte auf Wellenseite kann beispielsweise wie bei Kommutatorkontakten eines Universalmotors gestaltet sein, welche aus zylindrischen Kontaktsegmenten bestehen, die gleichmäßig über den Umfang der Welle angeordnet sind.

## Patentansprüche

1. Antriebssystem (100), aufweisend:
- einen Elektromotor (1) mit einer Welle (2),
- eine elektronische Baugruppe (3) zur Funktionssteuerung des Elektromotors (1), und
- einen mittels der Welle (2) angetriebenen Lüfter (4),
- wobei die elektronische Baugruppe (3) mit dem Lüfter (4) drehfest gekoppelt und thermisch gekoppelt ist, und
- wobei der Lüfter ein Lüfterrad (4) aufweist, welches drehfest mit der Welle (2) gekoppelt ist, wobei die elektronische Baugruppe (3) mit dem Lüfterrad (4) drehfest gekoppelt und thermisch gekoppelt ist,
**dadurch gekennzeichnet, dass**
- das Lüfterrad (4) ein Gehäuse der elektronischen Baugruppe (3) bildet, wobei die elektronische Baugruppe (3) mit einer Flügeloberfläche des Lüfterrads (4) verschraubt ist, und wobei die elektronische Baugruppe (3) mindestens einen Wechselrichter (3) zur Erzeugung von Ansteuersignalen für mindestens eine Rotorwicklung des Elektromotors (1) aufweist.

2. Antriebssystem (100) nach Anspruch 1, **dadurch gekennzeichnet, dass** der Elektromotor (1) ein Gehäuse (5) und wärmeerzeugende elektrische Funktionsgruppen, insbesondere in Form von Statorwicklungen und/oder Rotorwicklungen, aufweist, wobei die Funktionsgruppen innerhalb des Gehäuses (5) angeordnet sind und das Lüfterrad (4) und die elektronische Baugruppe (3) außerhalb des Gehäuses (5) angeordnet sind.

3. Antriebssystem (100) nach Anspruch 2, **dadurch gekennzeichnet, dass** zwischen der Welle (2) und dem Lüfterrad (4) ein thermisch isolierendes Element (7) angeordnet ist.

4. Antriebssystem (100) nach einem der vorhergehenden Ansprüche, **dadurch gekennzeichnet, dass** das Lüfterrad (4) aus einem Werkstoff mit hoher thermischer Leitfähigkeit besteht.

5. Antriebssystem (100) nach einem der vorhergehenden Ansprüche, **dadurch gekennzeichnet, dass** der Elektromotor (1) wärmeerzeugende elektrische Funktionsgruppen, insbesondere in Form von Rotorwicklungen, aufweist, wobei die elektronische Baugruppe (3) mittels lösbarer elektrischer Kontakte (8, 9) mit den elektrischen Funktionsgruppen elektrisch kontaktiert ist.

6. Antriebssystem (100) nach Anspruch 5, **dadurch gekennzeichnet, dass** die elektrischen Kontakte (8, 9) eine Anzahl von Kontaktsegmenten (8) umfassen, die über einen Umfang der Welle (2) verteilt angeordnet sind.

7. Antriebssystem (100) nach einem der vorhergehenden Ansprüche, **dadurch gekennzeichnet, dass** die elektronische Baugruppe (3) Mittel zur drahtlosen Datenübertragung aufweist.

## Claims

1. Drive system (100), comprising:
- an electric motor (1) with a shaft (2),
- an electronic assembly (3) for functionally controlling the electric motor (1), and
- a fan (4) driven by means of the shaft (2),
- wherein the electronic assembly (3) is coupled with the fan (4) for conjoint rotation and thermally coupled with it,
- wherein the fan has a fan impeller (4), which is coupled with the shaft (2) for conjoint rotation, wherein the electronic assembly (3) is coupled with the fan impeller (4) for conjoint rotation and thermally coupled with it,
**characterized in that**
- the fan impeller (4) forms a housing of the electronic assembly (3), wherein the electronic assembly (3) is screwed to the blade surface of the fan impeller (4), and wherein the electronic assembly (3) has at least one inverter (3) for generating actuation signals for at least one rotor winding of the electric motor (1).

2. Drive system (100) according to Claim 1, **characterized in that** the electric motor (1) has a housing (5) and heat-generating electrical functional groups, in particular in the form of stator windings and/or rotor windings, wherein the functional groups are disposed inside the housing (5) and the fan impeller (4) and the electronic assembly (3) are disposed outside the housing (5).

3. Drive system (100) according to Claim 2, **characterized in that** a thermally insulating element (7) is disposed between the shaft (2) and the fan impeller (4).

4. Drive system (100) according to one of the preceding claims, **characterized in that** the fan impeller (4) consists of a material with high thermal conductivity.

5. Drive system (100) according to one of the preceding claims, **characterized in that** the electric motor (1) has heat-generating electrical functional groups, in particular in the form of rotor windings, wherein the electronic assembly (3) is electrically contacted with the electrical functional groups by means of releasable electrical contacts (8,9).

6. Drive system (100) according to Claim 5, **characterized in that** the electrical contacts (8, 9) comprise a number of contact segments (8), which are disposed in a distributed manner over a circumference of the shaft (2).

7. Drive system (100) according to one of the preceding claims, **characterized in that** the electronic assembly (3) has means for wireless data transmission.

## Revendications

1. Système d'entraînement (100), comportant :
- un moteur électrique (1) muni d'un arbre (2),
- un ensemble électronique (3) destiné à commander fonctionnellement le moteur électrique (1), et
- un ventilateur (4) entraîné au moyen de l'arbre (2),
- l'ensemble électronique (3) étant accouplé solidairement en rotation, et couplé thermiquement, au ventilateur (4), et
- le ventilateur comportant une roue de ventilateur (4) qui est accouplée solidairement en rotation à l'arbre (2), l'ensemble électronique (3) étant accouplé solidairement en rotation, et couplé thermiquement, à la roue de ventilateur (4)
**caractérisé en ce que**
- la roue de ventilateur (4) forme un boîtier de l'ensemble électronique (3), l'ensemble électronique (3) étant vissé à une surface de pales de la roue de ventilateur (4), et l'ensemble électronique (3) comportant au moins un onduleur (3) destiné à générer des signaux de commande d'au moins un enroulement de rotor du moteur électrique (1).

2. Système d'entraînement (100) selon la revendication 1, **caractérisé en ce que** le moteur électrique (1) comporte un boîtier (5) et des groupes fonctionnels électriques générant de la chaleur, en particulier sous la forme d'enroulements de stator et/ou d'enroulements de rotor, les groupes fonctionnels étant disposés à l'intérieur du boîtier (5) et la roue de ventilateur (4) et l'ensemble électronique (3) étant disposés à l'extérieur du boîtier (5).

3. Système d'entraînement (100) selon la revendication 2, **caractérisé en ce qu'**un élément thermiquement isolant (7) est disposé entre l'arbre (2) et la roue de ventilateur (4).

4. Système d'entraînement (100) selon l'une des revendications précédentes, **caractérisé en ce que** la roue de ventilateur (4) est en une matière à haute conductivité thermique.

5. Système d'entraînement (100) selon l'une des revendications précédentes, **caractérisé en ce que** le moteur électrique (1) comporte des groupes fonctionnels électriques générant de la chaleur, notamment sous la forme d'enroulements de rotor, l'ensemble électronique (3) étant en contact électrique avec les groupes fonctionnels électriques au moyen de contacts électriques amovibles (8, 9).

6. Système d'entraînement (100) selon la revendication 5, **caractérisé en ce que** les contacts électriques (8, 9) comprennent un certain nombre de segments de contact (8) qui sont disposés de manière répartie sur une circonférence de l'arbre (2).

7. Système d'entraînement (100) selon l'une des revendications précédentes, **caractérisé en ce que** l'ensemble électronique (3) comporte des moyens de transmission de données sans fil.
